# EUROPEAN PATENT APPLICATION

(11) **EP 3 006 309 A1**
(43) Date of publication of application: **13.04.2016**
(21) Application number: 15187751.1
(22) Date of filing: 30.09.2015
(51) Int. Cl.: B62D 25/06, B60J 7/02

(54) **VEHICLE UPPER SECTION STRUCTURE**

(30) Priority: 09.10.2014 JP 2014207873
(71) Applicant: Toyota Jidosha Kabushiki Kaisha, Toyota-shi, Aichi-ken 471-8571 (JP)
(72) Inventor: OSHIMA, Takuya, TOYOTA-SHI, AICHI-KEN, 471-8571 (JP)
(74) Representative: Intès, Didier Gérard André

(57) **Abstract**

There is provided a vehicle upper section structure (40) including: a roof side rail (18) extending along a vehicle front-rear direction; a roof reinforcement (42) extending along a vehicle width direction further to the inside of a vehicle cabin than the roof side rail (18) and than a roof panel (14) of the vehicle; a center frame (44) that is disposed at a vehicle up-down direction upper side or lower side of the roof reinforcement (42), and that extends in the vehicle width direction; and a bracket (46) that is joined to a vehicle cabin inside of the roof side rail (18), to the roof reinforcement (42), and to the center frame (44).

## Description

### BACKGROUND

### Technical Field

The present invention relates to a vehicle upper section structure.

### Related Art

Japanese Patent Application Laid-Open (JP-A) No. 2009-056990 describes a vehicle upper section structure including roof reinforcement and reinforcement for a sunroof, in which a vehicle width direction end portion of the roof reinforcement is coupled to a rail inner of a roof side rail. In other words, since only the roof reinforcement is coupled to the rail inner, it could be said to be a vehicle upper section structure in which the reinforcement for the sunroof is not coupled to the rail inner.

However, in the related art described above, collision load applied to the roof side rail in a collision to a side face of the vehicle (in a side-on collision) is only transmitted through a bracket to the roof reinforcement, and greater transmission of load is desirable. Accordingly, in a structure in which only the roof reinforcement is coupled to the rail inner using a bracket, the reinforcement for the sunroof is not utilized to its full effect since there is only one load transmission path in a side-on collision. There is accordingly room for improvement in suppressing deformation of the vehicle upper section.

### SUMMARY

In consideration of the above circumstances, an object of the present invention is to obtain a vehicle upper section structure capable of suppressing deformation of the vehicle upper section in a side-on collision.

A first aspect of the present invention provides a vehicle upper section structure including:
a roof side rail extending along a vehicle front-rear direction;
a roof reinforcement extending along a vehicle width direction further to an inside of a vehicle cabin than the roof side rail and than a roof panel of the vehicle;
a center frame that is disposed at a vehicle up-down direction upper side or lower side of the roof reinforcement, and that extends in the vehicle width direction; and
a bracket that is joined to a vehicle cabin inside of the roof side rail, to the roof reinforcement, and to the center frame.

In the vehicle upper section structure of the first aspect of the present invention, the roof reinforcement and the center frame are joined to the roof side rail using the bracket. In a side-on collision, collision load is split and transmitted along a first transmission path from the roof side rail and through the bracket to the roof reinforcement, and a second transmission path from the roof side rail and through the bracket to the center frame.

Accordingly, in the vehicle upper section structure according to the present invention, collision load is split and transmitted along the first transmission path and the second transmission path in a direction away from the collision, thereby suppressing localized concentration of the collision load in part of the vehicle upper section. Deformation of the vehicle upper section in a side-on collision can accordingly be suppressed in comparison to the structure in which only the roof reinforcement is coupled to the rail inner.

A second aspect of the present invention provides the vehicle upper section structure of the first aspect, wherein the bracket joins together an upper face of whichever out of the roof reinforcement and the center frame is positioned on the vehicle up-down direction lower side, and a lower face of whichever out of the roof reinforcement and the center frame is positioned on the vehicle up-down direction upper side.

In the vehicle upper section structure of the second aspect of the present invention, the bracket joins together the upper face of whichever out of the roof reinforcement and the center frame is positioned on the vehicle up-down direction lower side, and the lower face of whichever out of the roof reinforcement and the center frame is positioned on the vehicle up-down direction upper side. This thereby enables the roof side rail, the roof reinforcement, and the center frame to be joined by the bracket, enabling the vehicle upper section structure to be configured with a simple structure.

A third aspect of the present invention provides the vehicle upper section structure of the first aspect or the second aspect, wherein the bracket includes:
a first bracket joined to the roof side rail and to one of the roof reinforcement or the center frame; and
a second bracket joined to the roof reinforcement and the center frame.

In the vehicle upper section structure of the third aspect of the present invention, the first bracket is joined to the roof side rail and to one out of the roof reinforcement or the center frame. The one out of the roof reinforcement or the center frame is thereby installed to the roof side rail by the first bracket. Moreover, the second bracket is joined to the roof reinforcement and the center frame. The other out of the roof reinforcement or the center frame is thereby installed to the one out of the roof reinforcement or the center frame through the second bracket.

The respective members can accordingly be assembled in sequence from the roof side rail side, thereby enabling greater ease of assembly of the vehicle upper section structure than in a configuration assembled from the roof side and the roof side rail side. Moreover, improving the ease of assembly of the vehicle upper section structure enables greater ease of construction of the vehicle upper section structure.

A fourth aspect of the present invention provides the vehicle upper section structure of any one of the first aspect through the third aspect, further including:
a sunroof unit that opens up and closes off an opening formed in the roof panel, wherein
the center frame forms a part of the sunroof unit.

In the vehicle upper section structure of the fourth aspect of the present invention, the center frame forms a part of the sunroof unit, thereby enabling a reduction in the number of components of the vehicle upper section structure than when the center frame and the sunroof unit are configured separately.

As described above, the vehicle upper section structure of the first aspect of the present invention exhibits the excellent advantageous effect of enabling deformation of the vehicle upper section to be suppressed in a side-on collision.

The vehicle upper section structure of the second aspect of the present invention exhibits the excellent advantageous effect of enabling the vehicle upper section structure to be configured with a simple structure.

The vehicle upper section structure of the third aspect of the present invention exhibits the excellent advantageous effect of enabling greater ease of assembly of the vehicle upper section structure.

The vehicle upper section structure of the fourth aspect of the present invention exhibits the excellent advantageous effect of enabling a reduction in the number of components of the vehicle upper section structure.

### BRIEF DESCRIPTION OF THE DRAWINGS

Exemplary embodiments of the present invention will be described in detail based on the following figures, wherein:
Fig. 1 is a perspective view illustrating an upper section of a vehicle applied with a vehicle upper section structure according to a first exemplary embodiment;
Fig. 2 is a perspective view illustrating relevant portions of a vehicle upper section according to the first exemplary embodiment, as viewed from the vehicle inside;
Fig. 3 is an enlarged cross-section taken along line 4-4 in Fig. 1;
Fig. 4 is a plan view illustrating relevant portions of a vehicle upper section according to the first exemplary embodiment, as viewed from the vehicle outside;
Fig. 5 is a perspective view illustrating relevant portions of a vehicle upper section according to the first exemplary embodiment, as viewed from the vehicle outside;
Fig. 6 is a perspective view illustrating relevant portions of a vehicle upper section according to the first exemplary embodiment, as viewed from the vehicle inside.
Fig. 7 is an enlarged cross-section taken along line 4-4 in Fig. 1.
Fig. 8 is a perspective view illustrating relevant portions of a vehicle upper section according to a second exemplary embodiment, as viewed from the vehicle inside.
Fig. 9 is a perspective view illustrating relevant portions of a vehicle upper section according to the second exemplary embodiment, as viewed from the vehicle outside.
Fig. 10 is an enlarged cross-section (a cross-section taken at a similar position to line 4-4 in Fig. 1) illustrating relevant portions of a vehicle upper section according to the second exemplary embodiment.

### DETAILED DESCRIPTION

### First Exemplary Embodiment

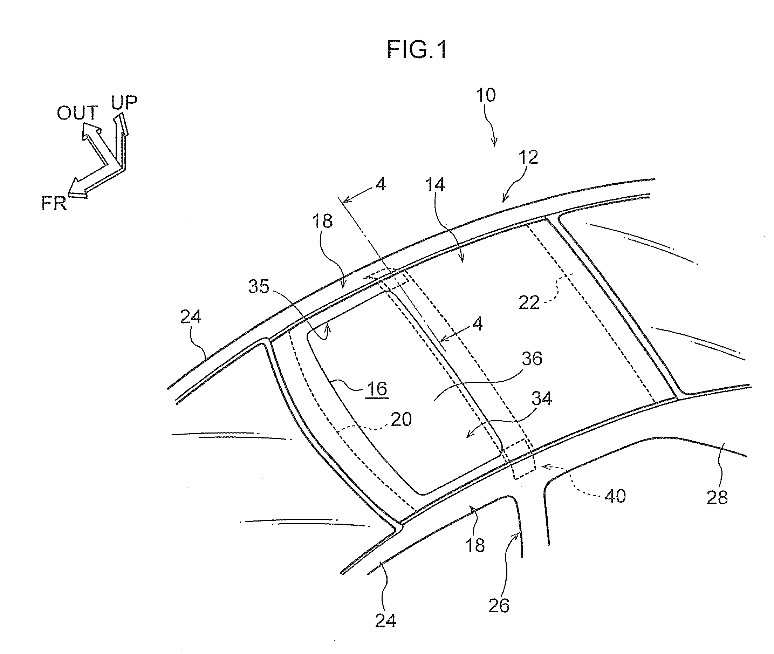

Explanation follows regarding a first exemplary embodiment of a vehicle upper section structure according to the present invention, with reference to Fig. 1 to Fig. 7. In each of the drawings, the arrow FR indicates the vehicle front side, the arrow UP indicates the vehicle upper side, and the arrow OUT indicates the vehicle width direction outside, as appropriate.

### Overall Vehicle Configuration

Fig. 1 illustrates a vehicle 10 according to the first exemplary embodiment. A vehicle upper section 12 of the vehicle 10 includes a roof panel 14.

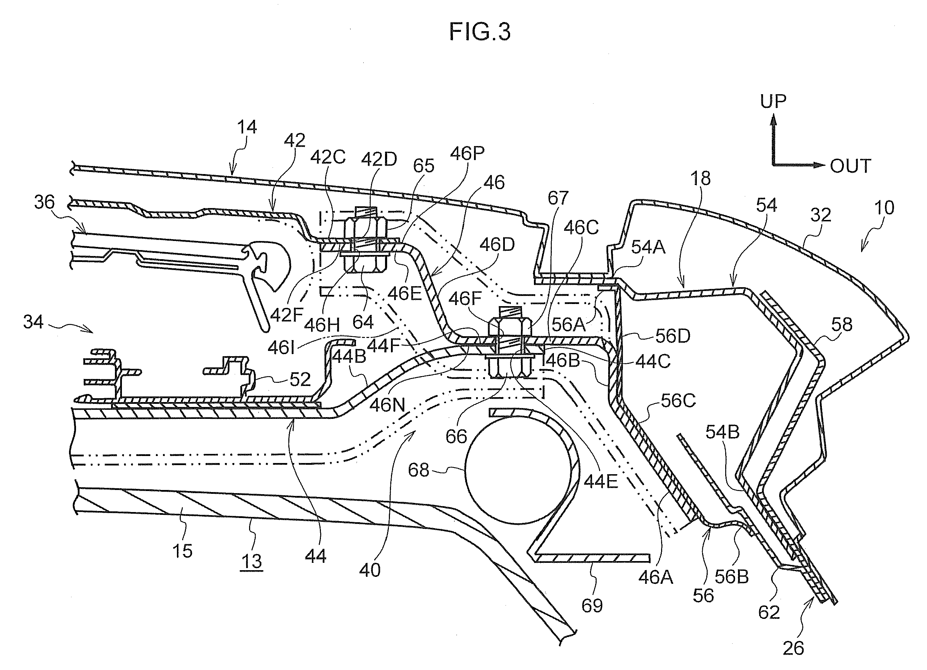

The roof panel 14 is formed with an opening 16 penetrating in the vehicle up-down direction. The opening 16 is enclosed by a frame 35, this being part of a sunroof unit 34, described later. Respective roof side rails 18 are provided extending in the vehicle front-rear direction on both vehicle width direction sides of the roof panel 14. Side outer panels 32, illustrated in Fig. 3, are provided at the vehicle width direction and vehicle up-down direction outsides of the roof side rails 18; however, the side outer panels 32 are omitted from illustration in Fig. 1.

A front header 20 spans between front end portions of the pair of roof side rails 18 along the vehicle width direction. A rear header 22 spans between rear end portions of the pair of roof side rails 18 along the vehicle width direction. Front pillars 24 extend from front end portions of the respective roof side rails 18 toward the vehicle front and vehicle downward direction. Center pillars 26 extend from vehicle front-rear direction central portions of the respective roof side rails 18 toward the vehicle downward direction. Moreover, rear pillars 28 extend from rear end portions of the respective roof side rails 18 toward the vehicle rear and the vehicle downward direction.

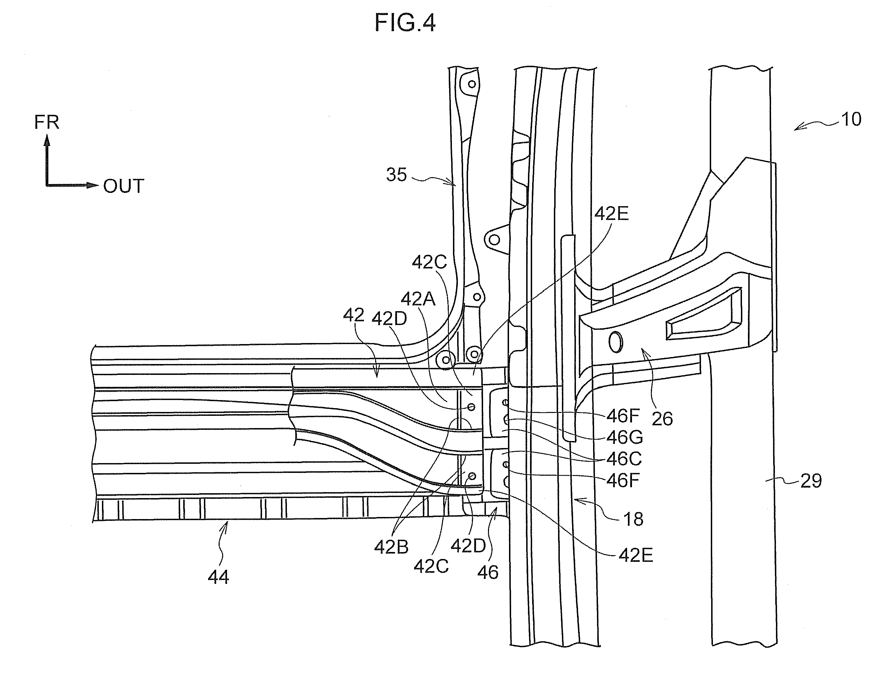

Lower end portions of the front pillars 24, lower end portions of the center pillars 26, and lower end portions of the rear pillars 28 are respectively joined to rockers 29 (see Fig. 4) that extend along the vehicle front-rear direction. The vehicle upper section 12 is also provided with a vehicle upper section structure 40.

### Configuration of Relevant Portions

Explanation follows regarding the vehicle upper section structure 40.

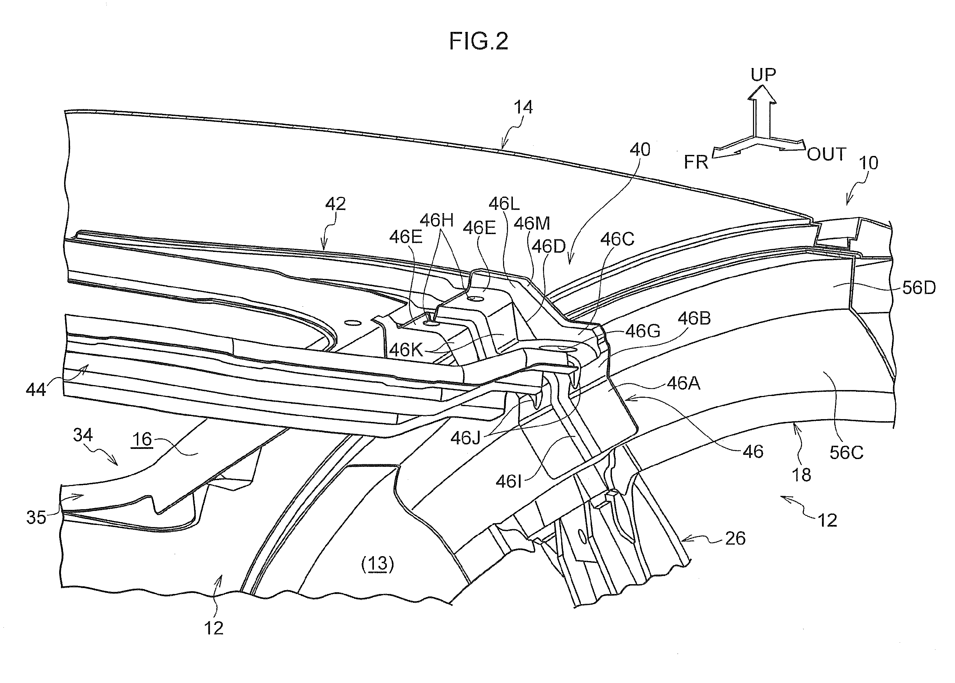

As illustrated in Fig. 2, the vehicle upper section structure 40 according to the first exemplary embodiment includes the roof side rails 18 already mentioned, roof reinforcement 42, a center frame 44, and brackets 46. As an example, the center frame 44 forms a part of the sunroof unit 34 provided to the vehicle upper section 12. Bolts 64 (see Fig. 3) are omitted from illustration in Fig. 2. The vehicle upper section structure 40 comprises similar joining structures on both vehicle width direction sides of the vehicle upper section 12. Explanation accordingly follows regarding the vehicle upper section structure 40 on one side in the vehicle width direction, and explanation regarding the other side is omitted.

### Roof Side Rail

As illustrated in Fig. 3, each roof side rail 18 is configured by a roof side rail outer panel 54 disposed at the outside of a vehicle cabin 13, and a roof side rail inner panel 56 disposed at the inside of the vehicle cabin 13. An upper end portion 54A of the roof side rail outer panel 54 is joined by welding to an upper end portion 56A of the roof side rail inner panel 56. A lower end portion 54B of the roof side rail outer panel 54 is joined by welding to an upper portion of a center pillar outer panel 58 configuring part of the center pillar 26. In Fig. 3, members and locations positioned further to the vehicle front-rear direction front side than the cross-section plane are illustrated by double-dotted intermittent lines.

A lower end portion 56B of the roof side rail inner panel 56 is joined by welding to an upper portion of a center pillar inner panel 62 configuring part of the center pillar 26. Moreover, the center pillar outer panel 58 and the center pillar inner panel 62 are joined together further to the vehicle up-down direction lower side than the lower end portion 54B and the lower end portion 56B. The roof side rail 18 is thus formed with a closed cross-section.

An inclined portion 56C extending in an upwards incline toward the vehicle width direction inside is formed at a vehicle up-down direction upper side of the lower end portion 56B of the roof side rail inner panel 56. An upright wall 56D extending toward the vehicle up-down direction upper side is formed at a vehicle up-down direction upper side of the inclined portion 56C. The upper end portion 56A mentioned above is a location jutting out from a vehicle up-down direction upper end of the upright wall 56D toward the vehicle width direction inside.

### Roof Reinforcement

As illustrated in Fig. 2, the roof reinforcement 42 is a reinforcement member of the roof panel 14, and extends in the vehicle width direction further to the inside of the vehicle cabin 13 (referred to below as the "vehicle cabin inside") than the roof panel 14. The roof reinforcement 42 is installed further to the vehicle cabin inside than the pair of roof side rails 18. The roof reinforcement 42 has an elongated shape with its length direction along the vehicle width direction, and is formed with a rectangular corrugated cross-section profile as taken along the vehicle front-rear direction.

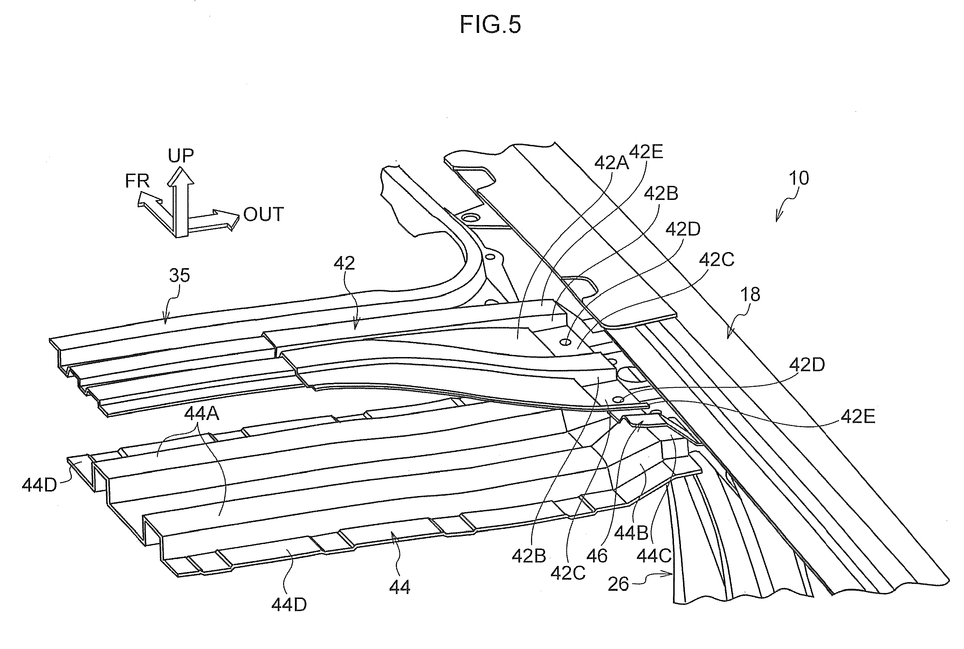

As illustrated in Fig. 5, a vehicle width direction end portion 42A of the roof reinforcement 42 is inclined gently downward on progression toward the roof side rail 18. As illustrated in Fig. 4, the end portion 42A of the roof reinforcement 42 is formed with grooves 42B at two locations in a row in the vehicle front-rear direction. A bottom portion 42C of each of the grooves 42B is formed in a flat plate shape along the vehicle width direction and the vehicle front-rear direction. A through hole 42D is formed penetrating each bottom portion 42C in the vehicle up-down direction. Moreover, flanges 42E are formed jutting out in the vehicle front-rear direction at a vehicle front side end portion and vehicle rear side end portion of the respective grooves 42B. Note that weld nuts 65 (see Fig. 3) integrally formed to the bottom portions 42C of the roof reinforcement 42 are omitted from illustration in Fig. 5.

As illustrated in Fig. 3, the through holes 42D are large enough to insert a shaft portion of the bolts 64. The bottom portions 42C of the roof reinforcement 42 are fastened to second fastening portions 46E, described later, of the bracket 46 using the bolts 64.

As illustrated in Fig. 4, in the present exemplary embodiment, the roof reinforcement 42 is installed between the pair of center pillars 26; however, there is no limitation thereto, and the roof reinforcement 42 may be installed at a position offset toward the vehicle front-rear direction front side or rear side of the center pillars 26. Plural of the roof reinforcements 42 may also be installed at intervals along the vehicle front-rear direction. One vehicle width direction end side of the roof reinforcement 42 may be offset with respect to the other end side in the vehicle front-rear direction, such that the roof reinforcement 42 is installed at an angle in plan view.

### Sunroof Unit

As illustrated in Fig. 3, the sunroof unit 34 is provided between roof headlining 15 that covers the roof panel 14 from the vehicle cabin 13 side, and the roof panel 14. The sunroof unit 34 includes a housing, not illustrated in the drawings, containing a center frame 44, a guide rail 52 fixed above the center frame 44, a sun roof 36 that is guided by the guide rail 52, and a drive mechanism, not illustrated in the drawings, that drives the sun roof 36.

Namely, the center frame 44 forms a part of the sunroof unit 34. An airbag 68 is provided between the roof headlining 15 and the roof side rail 18. The airbag 68 is partially covered by a resin protector 69.

As illustrated in Fig. 2, the sunroof unit 34 includes the frame 35, this being part of the housing, not illustrated in the drawings, forming the opening 16 of the vehicle 10. As illustrated in Fig. 1, in the sunroof unit 34 the opening 16 formed in the roof panel 14 is opened up and closed off by the sun roof 36, by moving the sun roof 36 in the vehicle front-rear direction and the vehicle up-down direction with the drive mechanism, not illustrated in the drawings.

### Center Frame

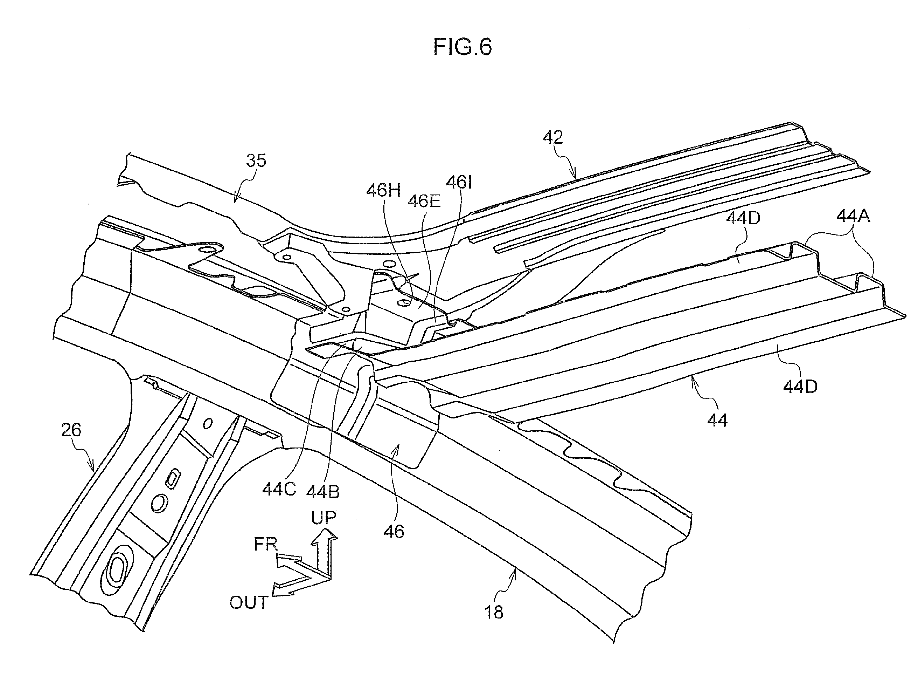

As illustrated in Fig. 5 and Fig. 6, the center frame 44 extends along the vehicle width direction between the pair of roof side rails 18, and at a vehicle up-down direction lower side of the roof reinforcement 42. The center frame 44 has an elongated shape with its length direction along the vehicle width direction, and is formed with a rectangular corrugated cross-section profile as taken along the vehicle front-rear direction.

Specifically, in the center frame 44, two ridges 44A, each with a rectangular cross-section profile protruding out toward the vehicle up-down direction upper side and running along the vehicle width direction, are formed in a row in the vehicle front-rear direction. Vehicle width direction end portions of the respective ridges 44A are formed with an inclined portion 44B extending in an upward incline on progression toward the vehicle width direction outside, and a flat portion 44C extending from a vehicle width direction end portion of the inclined portion 44B toward the vehicle width direction outside. Flanges 44D are formed jutting out along the vehicle front-rear direction at a vehicle front side end portion and a vehicle rear side end portion of the respective ridges 44A.

As illustrated in Fig. 3, the flat portion 44C of the center frame 44 is formed with through holes 44E penetrating in the vehicle up-down direction. The through holes 44E are large enough to enable insertion of a shaft portion of bolts 66. The flat portion 44C is fastened to first fastening portions 46C, described later, of the bracket 46 using the bolts 66.

In the present exemplary embodiment, the center frame 44 with a rectangular corrugated cross-section profile is employed; however, center frames with other cross-section profiles may be employed. The configuration of the center frame may be chosen as appropriate according to the vehicle model and the accompanying vehicle upper section structure. Moreover, the center frame 44 may be disposed at a vehicle up-down direction upper side of the roof reinforcement 42.

As an example, the frame 35 configures an upper frame on the vehicle up-down direction upper side of the sunroof unit 34. As an example, the center frame 44 defines a lower frame on the vehicle up-down direction lower side of the sunroof unit 34. Note that in the present exemplary embodiment, part of the frame 35 is disposed in a state reaching under the vehicle up-down direction lower side of the roof reinforcement 42; however, since the frame 35 is not joined to the bracket 46, the frame 35 is not included in the "center frame". In the sunroof unit 34, in, for example, a configuration in which the frame 35 and the center frame 44 are integrated together, or a configuration in which the center frame 44 is not present and the frame 35 and the bracket 46 are joined together, the frame 35 is included in the "center frame".

### Bracket

As illustrated in Fig. 2 and Fig. 3, the bracket 46 is configured by integrating together first inclined portions 46A, upright walls 46B, the first fastening portions 46C, second inclined portions 46D, and the second fastening portions 46E. Namely, as taken along the vehicle front-rear direction, the bracket 46 has a cross-section profile of a shape bent at plural locations.

Each first inclined portion 46A is a plate shaped portion extending in an upwards incline toward the vehicle width direction inside. The angle of inclination of the first inclined portion 46A with respect to the vehicle up-down direction is approximately the same as the angle of inclination of the inclined portion 56C of the roof side rail 18 with respect to the vehicle up-down direction. Each upright wall 46B is a plate shaped portion standing up in the vehicle up-down direction at a vehicle up-down direction upper end of the first inclined portion 46A.

Each first fastening portion 46C is a plate shaped portion extending along the vehicle width direction from a vehicle up-down direction upper end of the upright wall 46B toward the vehicle width direction inside. As illustrated in Fig. 4, the first fastening portions 46C are formed at two locations in a row in the vehicle front-rear direction. A through hole 46F is formed penetrating each first fastening portion 46C in the vehicle up-down direction. The size of each through hole 46F is set large enough to enable insertion of the shaft portion of the bolt 66 (see Fig. 3).

Each first fastening portion 46C is further formed with a through hole 46G penetrating in the vehicle up-down direction. The through hole 46G is a welding operation hole. Moreover, each first fastening portion 46C is formed with a weld nut 67 integrally formed to the first fastening portion 46C.

As illustrated in Fig. 3, each second inclined portion 46D is a plate shaped portion extending in an upward incline toward the vehicle width direction inside from a vehicle width direction inside end portion of the first fastening portion 46C. The angle of inclination of the second inclined portion 46D with respect to the vehicle up-down direction is smaller than the angle of inclination of the first inclined portion 46A with respect to the vehicle up-down direction. The length of the second inclined portion 46D as viewed in cross-section taken along the vehicle width direction is shorter than the length of the first inclined portion 46A as viewed in cross-section taken along the vehicle width direction.

Each second fastening portion 46E is a plate shaped portion extending along the vehicle width direction toward the vehicle width direction inside from a vehicle up-down direction upper end of the second inclined portion 46D. As illustrated in Fig. 2, the second fastening portions 46E are formed at two locations in a row along the vehicle front-rear direction. Each second fastening portion 46E is formed with a through hole 46H penetrating in the vehicle up-down direction. The size of the through hole 46H is large enough to enable insertion of a shaft portion of the bolt 64 (see Fig. 3).

As illustrated in Fig. 2, a reinforcement rib 46I is formed protruding toward the vehicle cabin 13 inside at the vehicle front-rear direction center of the bracket 46. The rib 46I is a single ridge connecting from the first inclined portions 46A to the second fastening portions 46E. The bracket 46 is also formed with reinforcement ribs 46J protruding toward the vehicle cabin 13 inside from the upright walls 46B and the first fastening portions 46C, and reinforcement ribs 46K protruding toward the vehicle cabin 13 inside from the second inclined portions 46D.

The bracket 46 is further formed with side walls 46L that stand up in the vehicle up-down direction at vehicle front-rear direction front sides and rear sides of the first fastening portions 46C, the second inclined portions 46D, and the second fastening portions 46E. Moreover, the bracket 46 is formed with flanges 46M respectively jutting out to the vehicle front-rear direction front side and rear side from vehicle up-down direction upper ends of the side walls 46L.

As illustrated in Fig. 3, the first inclined portions 46A of the bracket 46 are joined by welding (joined) to the inclined portion 56C of the roof side rail inner panel 56. The upright walls 46B are joined by welding (joined) to the upright wall 56D of the roof side rail inner panel 56. Moreover, the bracket 46 is fastened (joined) to the flat portion 44C of the center frame 44 by the bolts 66 in a state in which vehicle up-down direction lower faces 46N of the first fastening portions 46C are in contact with a vehicle up-down direction upper face 44F of the center frame 44.

Moreover, the bracket 46 is fastened (joined) to the bottom portions 42C at the vehicle width direction of the roof reinforcement 42 by the bolts 64 in a state in which vehicle up-down direction upper faces 46P of the second fastening portions 46E are in contact with a vehicle up-down direction lower face 42F of the roof reinforcement 42. The bracket 46 is thereby joined to the vehicle cabin inside of the roof side rail 18, and to the upper face 44F of the center frame 44 and the lower face 42F of the roof reinforcement 42.

### Vehicle Upper Section Structure Assembly

As illustrated in Fig. 3, during assembly of the vehicle upper section structure 40, the first inclined portion 46A and the upright wall 46B of the bracket 46 are welded (joined) to the inclined portion 56C and the upright wall 56D of the roof side rail inner panel 56. Then, in an assembled state of the roof panel 14 and the roof reinforcement 42, the bottom portions 42C of the roof reinforcement 42 are placed on the second fastening portions 46E of the bracket 46. The bolts 64 are then inserted through the through holes 46H and the through holes 42D from the vehicle lower side, and the roof reinforcement 42 and the bracket 46 are fastened together.

The bolts 66 are then inserted through the through holes 44E and the through holes 46F from the vehicle lower side in a state in which the upper face 44F of the center frame 44 is pressed against the lower faces 46N of the bracket 46, thereby fastening the center frame 44 and the bracket 46 together. The vehicle upper section structure 40 is formed in this manner.

The bracket 46 is joined to the vehicle cabin inside of the roof side rail 18; however, the bracket 46 and the roof side rail 18 may be joined together through another member, for example, by extending the center pillar inner panel 62 to between the roof side rail 18 and the bracket 46. Namely, the concept of "a bracket that is joined to a vehicle cabin inside of the roof side rail" is not limited to joining the bracket 46 directly to the roof side rail 18, and also encompasses joining the bracket 46 to the vehicle cabin inside of the roof side rail 18 indirectly through another member.

### Operation and Advantageous Effects

Next, explanation follows regarding operation and advantageous effects of the vehicle upper section structure 40 of the first exemplary embodiment.

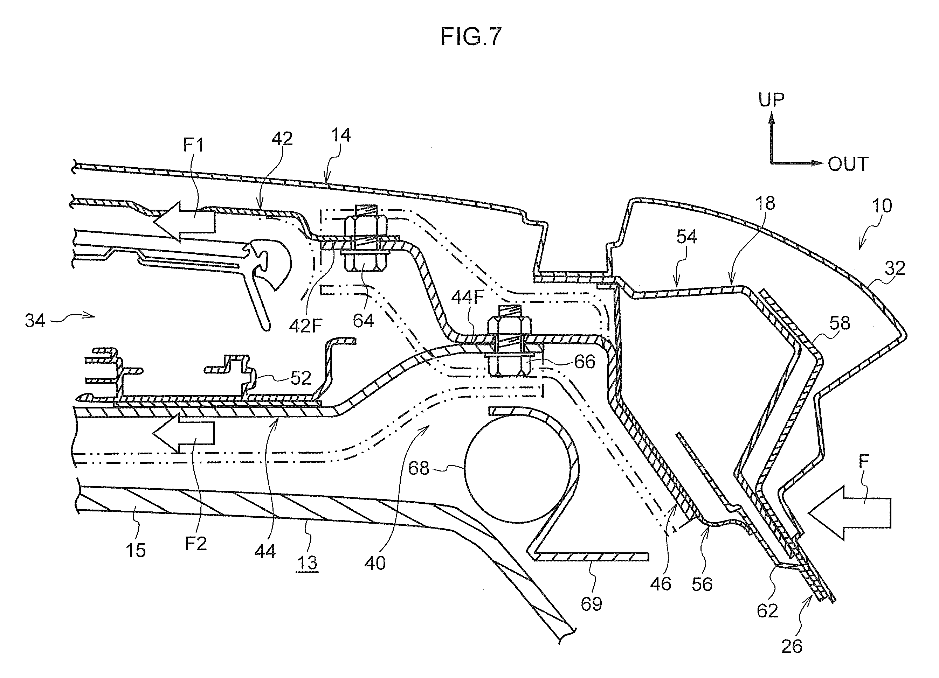

As illustrated in Fig. 7, when a load F is input to a side section of the vehicle body of the vehicle 10 from the side of the vehicle 10 in a side-on collision, the load F is transmitted from the center pillar 26 to the roof side rail 18, and then input to the bracket 46 that is joined to the roof side rail 18.

In the vehicle upper section structure 40, the roof reinforcement 42 and the center frame 44 are joined to the roof side rail 18 through the bracket 46. Accordingly, the load F input to the bracket 46 is transmitted along a first transmission path from the bracket 46 to the roof reinforcement 42 as load F1, and is transmitted along a second transmission path from the bracket 46 to the center frame 44 as load F2. Namely, the load F input to the bracket 46 is split into the load F1 and the load F2 and efficiently transmitted. Note that the bracket 46 input with the load F undergoes plastic deformation or the like, thereby acting to absorb a specific amount of energy.

In the vehicle upper section structure 40, the load F input to the side section of the vehicle body of the vehicle 10 is split and transmitted as the load F1 of the first transmission path and the load F2 of the second transmission path in a direction away from the collision. Localized concentration of the load F on part of the vehicle upper section 12 is accordingly suppressed. This thereby enables deformation of the vehicle upper section 12 to be suppressed in a side-on collision in comparison to in a structure in which only the roof reinforcement 42 is joined to the roof side rail 18 in the vehicle upper section structure 40.

In the vehicle upper section structure 40, the roof reinforcement 42 and the center frame 44 are installed between the pair of center pillars 26. Accordingly, when the load F is input to the side section of the vehicle body of the vehicle 10, the loads F1, F2 can be efficiently transmitted from the center pillars 26 to the roof reinforcement 42 and the center frame 44 through the bracket 46. The center pillar 26 can be suppressed from collapsing toward the vehicle width direction inside as a result, enabling space inside the vehicle cabin 13 to be secured.

In the vehicle upper section structure 40, the bracket 46 is joined to the upper face 44F of the center frame 44 on the vehicle up-down direction lower side, and to the lower face 42F of the roof reinforcement 42 on the vehicle up-down direction upper side. The roof side rail 18, the roof reinforcement 42, and the center frame 44 can accordingly be joined together by the bracket 46, enabling a simple structure for the vehicle upper section structure 40.

Moreover, in the vehicle upper section structure 40, the center frame 44 forms a part of the sunroof unit 34, thereby enabling the number of components of the vehicle upper section structure 40 to be reduced in comparison to configurations in which the center frame 44 and the sunroof unit 34 are configured separately.

In the present exemplary embodiment, the vehicle upper section structure 40 is applied with similar joining structures on both vehicle width direction sides. However, there is no limitation thereto, and different joining structures may be applied on one and the other vehicle width direction sides. For example, the roof side rail 18 and the bracket 46 may be joined together by laser welding on one vehicle width direction side, and the roof side rail 18 and the bracket 46 may be joined together by nuts and bolts on the other vehicle width direction side.

### Second Exemplary Embodiment

Next, explanation follows regarding a vehicle upper section structure 80 according to a second exemplary embodiment.

The vehicle upper section structure 80 according to the second exemplary embodiment is provided to the vehicle 10 according to the first exemplary embodiment illustrated in Fig. 1 in place of the vehicle upper section structure 40. Note that configurations similar to those of the first exemplary embodiment are allocated the same reference numerals, and explanation thereof is omitted as appropriate. "Similar configuration" is a concept encompassing configurations that have basically the same function, even when there is some difference in length or shape.

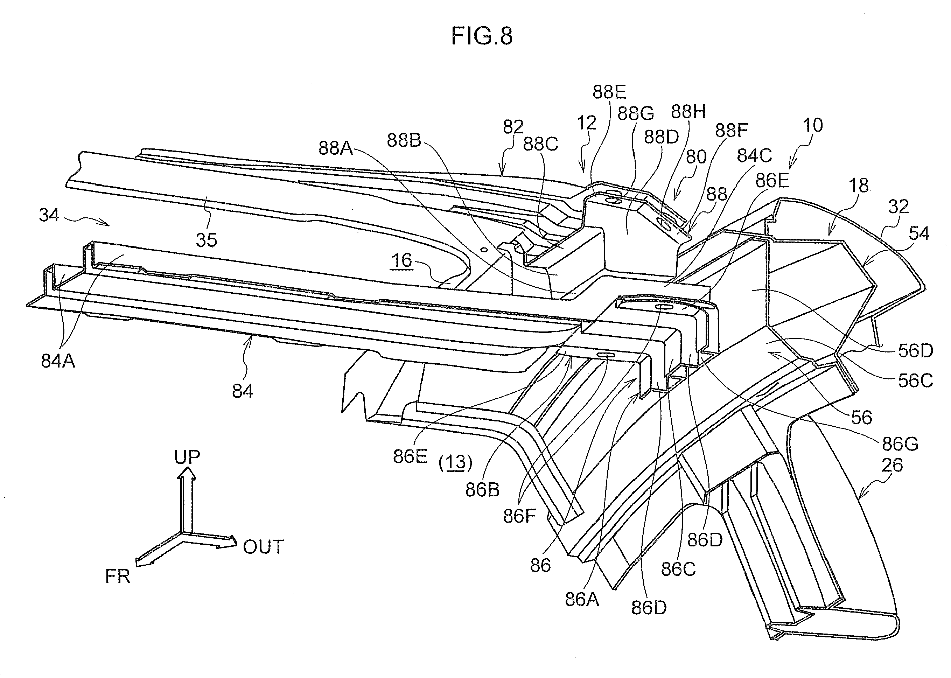

As illustrated in Fig. 8, the vehicle upper section structure 80 includes the roof side rail 18, roof reinforcement 82, a center frame 84, a first bracket 86, and a second bracket 88. As an example, the center frame 84 forms a part of the sunroof unit 34 provided to the vehicle upper section 12. Bolts and a roof panel are omitted from illustration in Fig. 8. Note that the vehicle upper section structure 80 employs similar joining structures on both vehicle width direction sides of the vehicle upper section 12. Explanation therefore follows regarding the vehicle upper section structure 80 on one vehicle width direction side, and explanation regarding the other side is omitted.

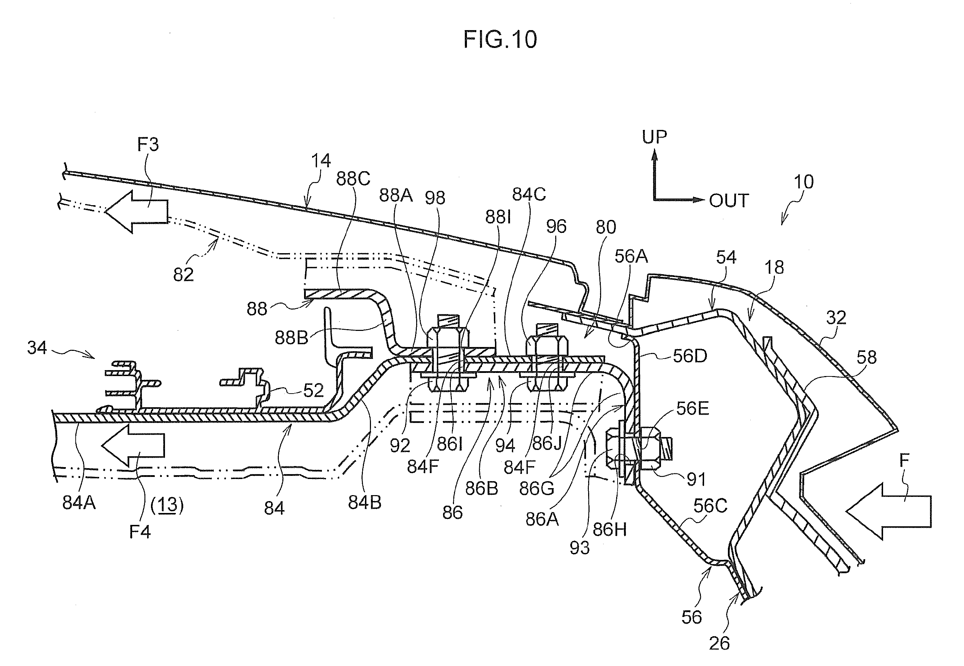

As illustrated in Fig. 10, in the present exemplary embodiment, the upright wall 56D of the roof side rail inner panel 56 is formed with through holes 56E penetrating in the vehicle width direction. Weld nuts 91 are formed at peripheral edges on the vehicle width direction outside of the through holes 56E.

### Roof Reinforcement

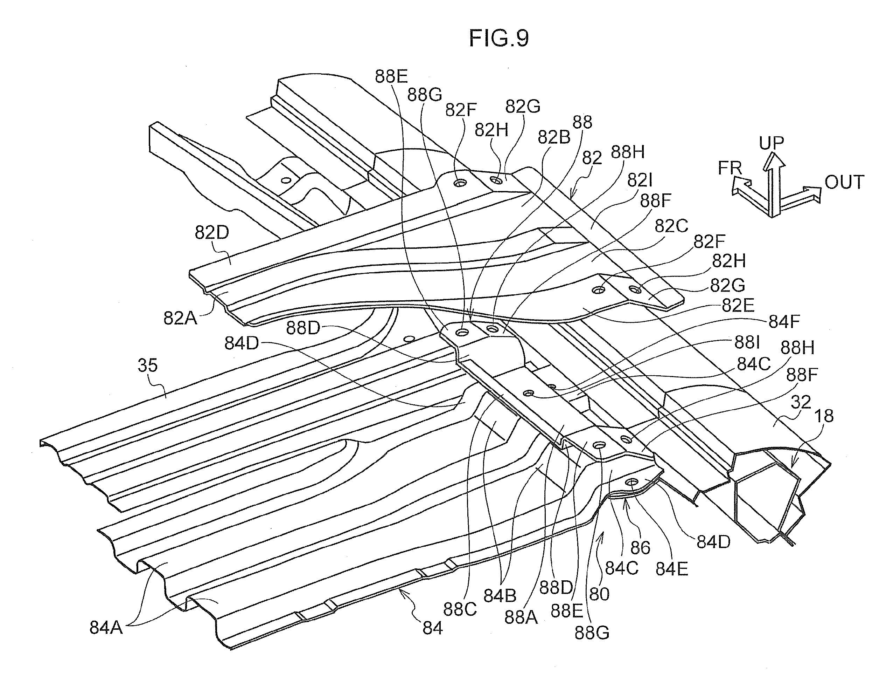

The roof reinforcement 82 illustrated in Fig. 9 is a reinforcement member of the roof panel 14 (see Fig. 1), and extends along the vehicle width direction further to the vehicle cabin inside than the roof panel 14. The roof reinforcement 82 is moreover installed further to the vehicle cabin inside than the pair of roof side rails 18. The roof reinforcement 82 has an elongated shape with its length direction along the vehicle width direction, and is formed with a rectangular corrugated cross-section profile as taken along the vehicle front-rear direction.

The roof reinforcement 82 is formed with a ridge 82A that protrudes out toward the vehicle up-down direction upper side, and has a rectangular cross-section profile running along the vehicle width direction, and grooves 82B, 82C that extend along the vehicle width direction at the vehicle front-rear direction front side and rear side of the ridge 82A, and open toward the vehicle up-down direction upper side. The roof reinforcement 82 is also formed with a plate shaped flange 82D jutting out from a vehicle up-down direction upper end of the groove 82B toward the vehicle front-rear direction front side, and a plate shaped flange 82E jutting out from the vehicle up-down direction upper end of the groove 82C toward the vehicle front-rear direction rear side.

Vehicle width direction end portions of the flanges 82D, 82E are formed with respective through holes 82F penetrating in the vehicle up-down direction. The roof reinforcement 82 is also formed with plate shaped inclined portions 82G extending in a downward incline toward the vehicle width direction outside from vehicle width direction end portions of the flanges 82D, 82E. Each inclined portion 82G is formed with a through hole 82H penetrating in the plate thickness direction. The roof reinforcement 82 is moreover formed with a plate shaped rim portion 82I jutting out from vehicle width direction end portions of the ridge 82A, the grooves 82B, 82C, and the inclined portion 82G toward the vehicle width direction outside.

As illustrated in Fig. 8, in the present exemplary embodiment, the roof reinforcement 82 is installed between the pair of center pillars 26; however, there is no limitation thereto, and the roof reinforcement 82 may be installed at a position offset to the vehicle front-rear direction front side or rear side of the center pillars 26. Plural of the roof reinforcements 82 may also be installed at intervals along the vehicle front-rear direction. Moreover, one vehicle width direction end side of the roof reinforcement 82 may be offset with respect to the other side in the vehicle front-rear direction, such that the roof reinforcement 82 is installed at an angle in plan view.

### Center Frame

As illustrated in Fig. 9, the center frame 84 extends along the vehicle width direction between the pair of roof side rails 18, and at the vehicle up-down direction lower side of the roof reinforcement 82. The center frame 84 has an elongated shape with its length direction along the vehicle width direction, and is formed with a rectangular corrugated cross-section profile as taken along the vehicle front-rear direction. The center frame 84 forms a part of the sunroof unit 34.

Specifically, in the center frame 84, two ridges 84A, each with a rectangular cross-section profile protruding out toward the vehicle up-down direction upper side and running along the vehicle width direction are formed in a row in the vehicle front-rear direction. Vehicle width direction end portions of the ridges 84A are formed with inclined portions 84B extending in an upward incline toward the vehicle width direction outside, and flat portions 84C extending from vehicle width direction end portions of the inclined portions 84B toward the vehicle width direction outside. Moreover, flanges 84D jutting out in the vehicle front-rear direction are formed at a vehicle front side end portion and a vehicle rear side end portion of the respective ridges 84A. Through holes 84E are formed penetrating the flanges 84D in the vehicle up-down direction.

As illustrated in Fig. 10, the flat portions 84C of the center frame 84 are each formed with through holes 84F penetrating in the vehicle up-down direction, at two locations separated in the vehicle width direction. The two through holes 84F are large enough to enable insertion of shaft portions of bolts 92, 94. Weld nuts 96 are formed at peripheral edges on the vehicle up-down direction upper side of the vehicle width direction outside through holes 84F of the flat portions 84C. The flat portions 84C are fastened to the first bracket 86 and the second bracket 88, described later, by the bolts 92, 94.

In Fig. 10, members and locations positioned further to the vehicle front-rear direction front side than the cross-section plane are illustrated by double-dotted intermittent lines. Moreover, the roof headlining 15, the airbag 68, and the protector 69 (see Fig. 1) are omitted from illustration in Fig. 10.

In the present exemplary embodiment, the center frame 84 with a rectangular corrugated cross-section profile is employed; however, center frames with other cross-section profiles may also be employed. The configuration of the center frame may be chosen as appropriate according to the vehicle model and the accompanying vehicle upper section structure. Moreover, the center frame 84 may be disposed at the vehicle up-down direction upper side of the roof reinforcement 82.

### First Bracket

As illustrated in Fig. 8, the first bracket 86 has its length direction in the vehicle width direction, and is configured in an inverted L shape by bending a member that has a rectangular corrugated cross-section profile as taken along the vehicle front-rear direction. Specifically, the first bracket 86 includes an upright wall 86A standing up along the vehicle up-down direction, and an extension portion 86B that extends along the vehicle width direction toward the vehicle cabin inside from a vehicle up-down direction upper end of the upright wall 86A.

The upright wall 86A and the extension portion 86B are respectively formed with a single ridge 86C with a rectangular cross-section profile protruding toward the vehicle cabin inside, and two grooves 86D opening toward the vehicle cabin inside at a vehicle front-rear direction front side and rear side of the ridge 86C. The upright wall 86A and the extension portion 86B are also formed with plate shaped flanges 8 6E jutting out toward the vehicle front-rear direction front side and rear side from a vehicle front-rear direction front end and rear end of the respective grooves 86D. The flanges 86E at the extension portion 86B are each formed with a through hole 86F penetrating in the vehicle up-down direction. Plate shaped locations corresponding to bottom portions of the grooves 86D as viewed from the vehicle cabin inside are referred to as fastened-to portions 86G.

As illustrated in Fig. 10, at the upright wall 86A the fastened-to portions 86G are each formed with a through hole 86H penetrating in the vehicle width direction. Moreover, at the extension portion 86B the fastened-to portions 86G are formed with through holes 86I, 86J penetrating in the vehicle up-down direction at intervals in the vehicle width direction. Note that in the fastened-to portions 86G, the through holes 86I are formed on the side nearer the center of the vehicle cabin 13, and the through holes 86J are formed on the side further from the center of the vehicle cabin 13.

### Second Bracket

As illustrated in Fig. 8, the second bracket 88 is a member integrating together a bottom portion 88A, a first side portion 88B, a flat portion 88C, second side portions 88D, first flanges 88E, and second flanges 88F. Note that Fig. 8 and Fig. 9 illustrate the respective members in a state prior to being fastened (joined) together by bolts.

The bottom portion 88A is a rectangular plate shaped portion extending in the vehicle width direction and the vehicle front-rear direction, and has a size that enables it to rest on the flat portions 84C of the center frame 84. As illustrated in Fig. 10, the bottom portion 88A is formed with through holes 88I penetrating in the vehicle up-down direction. A weld nut 98 is formed at a location on the vehicle up-down direction upper side of a peripheral edge of each through hole 88I of the bottom portion 88A.

The first side portion 88B is a rectangular plate shaped portion extending from a vehicle width direction inside end portion of the bottom portion 88A toward the vehicle up-down direction upper side. The flat portion 88C is a rectangular plate shaped location extending from a vehicle up-down direction upper end of the first side portion 88B toward the vehicle width direction inside. The length of the flat portion 88C in the vehicle width direction is shorter than the length of the bottom portion 88A in the vehicle width direction.

As illustrated in Fig. 8, the second side portions 88D are plate shaped portions standing up in the vehicle up-down direction at a vehicle front-rear direction front side end portion and rear side end portion of the bottom portion 88A, the first side portion 88B, and the flat portion 88C.

As illustrated in Fig. 9, the first flanges 88E are plate shaped portions jutting out to the vehicle front-rear direction front side and rear side from a vehicle up-down direction upper ends of the respective second side portions 88D. Each first flange 88E is formed with a through hole 88G penetrating in the vehicle up-down direction. The vehicle up-down direction position of the first flanges 88E is a higher position than the vehicle up-down direction position of the flat portions 84C.

The second flanges 88F are plate shaped inclined portions at vehicle up-down direction upper portions of the second side portions 88D, and each extend in a downward incline toward the vehicle width direction outside from vehicle width direction outside end portions of the first flange 88E. The second flanges 88F are each formed with a through hole 88H penetrating in the vehicle up-down direction.

A vehicle width direction outside end portion of the bottom portion 88A, and a vehicle width direction inside end portion of the flat portion 88C, are not provided with side walls standing up in the vehicle up-down direction, and are open.

As illustrated in Fig. 10, at the upright wall 86A of the first bracket 86, the fastened-to portions 86G are joined to the roof side rail inner panel 56 by fastening bolts 93 to the weld nuts 91. At the extension portion 86B of the first bracket 86, the fastened-to portions 86G are joined to the center frame 84 and the second bracket 88 by fastening the bolts 92 to the weld nuts 98, and fastening the bolts 94 to the weld nuts 96.

Bolts, not illustrated in the drawings, are inserted through the through holes 86F of the first bracket 86 (see Fig. 8) and the through holes 84E of the center frame 84 (see Fig. 9), and fastened to nuts, thereby joining the flanges 86E (see Fig. 8) and the flanges 84D (see Fig. 9) together. Moreover, as illustrated in Fig. 9, bolts, not illustrated in the drawings, are inserted through the through holes 88G and the through holes 82F, and the through holes 88H and the through holes 82H, and fastened to nuts, thereby joining the second bracket 88 and the roof reinforcement 82 together.

### Vehicle Upper Section Structure Assembly

As illustrated in Fig. 8 and Fig. 9, during assembly of the vehicle upper section structure 80, bolts, not illustrated in the drawings, are inserted through the through holes 88G and the through holes 82F, and the through holes 88H and the through holes 82H, and fastened to nuts, thereby joining a vehicle up-down direction upper side of the second bracket 88 to the roof reinforcement 82. Then, as illustrated in Fig. 10, the bolts 94 are inserted through the through holes 86J and the vehicle width direction outside through holes 84F, and temporarily fastened to the weld nuts 96, thereby temporarily joining a vehicle up-down direction upper side of the first bracket 86 to the center frame 84.

Then as illustrated in Fig. 10, the bolts 93 are inserted through the through holes 86H and the through holes 56E and fastened to the weld nuts 91, thereby joining the vehicle width direction inside of the roof side rail inner panel 56 to the first bracket 86. Then the second bracket 88 is placed on the vehicle up-down direction upper side of the center frame 84. Then the bolts 92 are inserted through the through holes 86I, the vehicle width direction inside through holes 84F, and the through holes 88I from the vehicle lower side, and fastened to the weld nuts 96. The temporarily fastened bolts 94 are further fastened to the weld nuts 96 from the vehicle lower side, thereby joining the center frame 84 to the vehicle up-down direction upper side of the first bracket 86. The vehicle upper section structure 80 is formed in this manner.

The first bracket 86 is joined to the vehicle cabin inside of the roof side rail 18; however, the first bracket 86 and the roof side rail 18 may be joined together through another member, for example by extending the center pillar inner panel to between the roof side rail 18 and the first bracket 86. Namely, the concept of "a bracket that is joined to a vehicle cabin inside of the roof side rail" is not limited to joining the first bracket 86 directly to the roof side rail 18, and also encompasses joining the first bracket 86 to the vehicle cabin inside of the roof side rail 18 indirectly through another member.

### Operation and Advantageous Effects

Next, explanation follows regarding operation and advantageous effects of the vehicle upper section structure 80 of the second exemplary embodiment.

As illustrated in Fig. 10, when a load F is input to a side section of the vehicle body of the vehicle 10 from the side of the vehicle 10 in a side-on collision, the load F is transmitted from the center pillars 26 to the roof side rail 18, and then input to the first bracket 86 that is joined to the roof side rail 18.

The load F input to the first bracket 86 is transmitted along a first transmission path from the first bracket 86 and through the center frame 84 and the second bracket 88 to the roof reinforcement 82 as load F3. The load F input to the first bracket 86 is also transmitted along a second transmission path from the first bracket 86 to the center frame 84 as load F4. Namely, the load F input to the first bracket 86 is split into the load F3 and the load F4 and efficiently transmitted. Note that the first bracket 86 input with the load F and the second bracket 88 input with the load F3 undergo plastic deformation or the like, thereby acting to absorb a specific amount of energy.

Accordingly, in the vehicle upper section structure 80, the load F input to the side section of the vehicle body of the vehicle 10 is split and transmitted as the load F3 of the first transmission path and the load F4 of the second transmission path in a direction away from the collision. Localized concentration of the load F on part of the vehicle upper section 12 is accordingly suppressed. This thereby enables deformation of the vehicle upper section 12 to be suppressed in a side-on collision in comparison to in a structure in which only the roof reinforcement 82 is joined to the roof side rail 18 in the vehicle upper section structure 80.

In the vehicle upper section structure 80, the roof reinforcement 82 and the center frame 84 are installed between the pair of center pillars 26. Accordingly, when the load F is input to the side section of the vehicle body of the vehicle 10, the loads F3, F4 can be efficiently transmitted from the center pillars 26 to the roof reinforcement 82 and the center frame 84 through the first bracket 86 and the second bracket 88. The center pillars 26 can be suppressed from collapsing toward the vehicle width direction inside as a result, enabling space inside the vehicle cabin 13 to be secured.

In the vehicle upper section structure 80, the respective members are assembled in sequence from the roof side rail 18 side, enabling greater ease of assembly of the vehicle upper section structure 80 than in a configuration assembled from the roof side and the roof side rail side. Moreover, improving the ease of assembly of the vehicle upper section structure 80 enables greater ease of construction of the vehicle upper section structure 80.

Moreover, in the vehicle upper section structure 80, the center frame 84 forms a part of the sunroof unit 34, thereby enabling the number of components of the vehicle upper section structure 80 to be reduced in comparison to configurations in which the center frame 84 and the sunroof unit 34 are configured separately. Other operation is similar to that of the first exemplary embodiment.

In the present exemplary embodiment, the vehicle upper section structure 80 is applied with similar joining structures on both vehicle width direction sides. However, there is no limitation thereto, and different joining structures may be applied on one and the other vehicle width direction sides. For example, the roof side rail 18 and the first bracket 86 may be joined together by laser welding on one vehicle width direction side, and the roof side rail 18 and the first bracket 86 may be joined together by nuts and bolts on the other vehicle width direction side.

The roof reinforcement 42, the center frame 44, and the bracket 46 may be installed at positions offset toward the vehicle front-rear direction front side or rear side of the center pillars 26. In such cases, as an example, the bracket 46 may be widened along the vehicle front-rear direction such that part of the bracket 46 overlaps with the center pillars 26 in the vehicle front-rear direction, thereby increasing the transmission efficiency of load input from the center pillars 26.

The roof reinforcement 82, the center frame 84, the first bracket 86, and the second bracket 88 may be installed at positions offset toward the vehicle front-rear direction front side or rear side of the center pillars 26. In such cases, as an example, the first bracket 86 and the second bracket 88 may be widened along the vehicle front-rear direction such that part of the first bracket 86 and the second bracket 88 overlap with the center pillars 26 in the vehicle front-rear direction, thereby increasing the transmission efficiency of load input from the center pillars 26.

Explanation has been given regarding vehicle upper section structures according to the first exemplary embodiment and the second exemplary embodiment of the present invention; however these exemplary embodiments may be employed in combination as appropriate, and obviously various configurations may be implemented within a range not departing from the scope of the present invention.

## Claims

1. A vehicle upper section structure (40) comprising:
a roof side rail (18) extending along a vehicle front-rear direction;
a roof reinforcement (42) extending along a vehicle width direction further to the inside of a vehicle cabin than the roof side rail (18) and than a roof panel (14) of the vehicle;
a center frame (44) that is disposed at a vehicle up-down direction upper side or lower side of the roof reinforcement (42), and that extends in the vehicle width direction; and
a bracket (46) that is joined to a vehicle cabin inside portion of the roof side rail (18), to the roof reinforcement (42), and to the center frame (44).

2. The vehicle upper section structure (40) of claim 1, wherein the bracket (46) joins together an upper face of whichever out of the roof reinforcement (42) and the center frame (44) is positioned on the vehicle up-down direction lower side, and a lower face of whichever out of the roof reinforcement (42) and the center frame (44) is positioned on the vehicle up-down direction upper side.

3. The vehicle upper section structure (40) of claim 1 or claim 2, wherein the bracket (46) comprises:
a first bracket (86) joined to the roof side rail (18) and to one of the roof reinforcement (42) or the center frame (44); and
a second bracket (88) joined to the roof reinforcement (42) and the center frame (44).

4. The vehicle upper section structure (40) of any one of claims 1-3, further comprising:
a sunroof unit (34) that opens up and closes off an opening (16) formed in the roof panel (14), wherein
the center frame (44) defines a part of the sunroof unit (34).
